# EUROPEAN PATENT APPLICATION

(11) **EP 4 513 797 A1**
(43) Date of publication of application: **26.02.2025**
(21) Application number: 23847014.0
(22) Date of filing: 27.07.2023
(51) Int. Cl.: H04L 1/00, H04L 69/14, H04L 69/24, H04W 84/12, H04W 76/15

(54) **METHOD AND APPARATUS FOR DYNAMIC REESTABLISHMENT OF MULTI-LINKS**

(30) Priority: 27.07.2022 KR 20220093182
(71) Applicant: Hyundai Motor Company, Seoul 06797 (KR); Kia Corporation, Seocho-gu Seoul 06797 (KR); Korea National University of Transportation Industry-Academic Cooperation Foundation, Chungju-si, Chungcheongbuk-do 27469 (KR)
(72) Inventor: KIM, Yong Ho, Incheon 21562 (KR); MOON, Ju Seong, Osan-si, Gyeonggi-do 18101 (KR)
(74) Representative: Isarpatent
(86) International application number: PCT/KR2023/010913
(87) International publication number: WO 2024/025357

(57) **Abstract**

Disclosed are a method and apparatus for dynamic reestablishment of multi-links. The method for a first device comprises the steps of: performing, with a second device, first communication according to an NSTR operation on one link from among a first link and a second link; transmitting, to the second device on the one link, STR reconfiguration information including one or more information elements necessary for a conditional STR operation; and on the basis of the one or more information elements, performing, with the second device on the first link and the second link, second communication according to the conditional STR operation.

## Description

### [Technical Field]

The present disclosure relates to a wireless local area network (LAN) communication technique, and more particularly, to a technique for reconfiguring a multi-link and/or operations on the multi-link.

### [Background Art]

Recently, as the spread of mobile devices expands, a wireless local area network technology capable of providing fast wireless communication services to mobile devices is in the spotlight. The wireless LAN technology may be a technology that supports mobile devices such as smart phones, smart pads, laptop computers, portable multimedia players, embedded devices, and the like to wirelessly access the Internet based on wireless communication technology.

The standards that use wireless LAN technology are mainly developed as the Institute of Electrical and Electronics Engineers (IEEE) 802.11 standards. As the aforementioned wireless LAN technology has been developed and widely adopted, applications utilizing wireless LAN technology have diversified, and demand has arisen for wireless LAN technology that supports a higher throughput. The wireless LAN can support multi-link operations, and in such cases, methods for (re)configuring multi-links may be required.

Meanwhile, the technologies that are the background of the present disclosure are written to improve the understanding of the background of the present disclosure and may include content that is not already known to those of ordinary skill in the art to which the present disclosure belongs.

### [Disclosure]

### [Technical Problem]

The present disclosure is directed to providing a method and an apparatus for changing and/or reconfiguring link information in a wireless LAN supporting a multi-link.

### [Technical Solution]

A method of a first device, according to exemplary embodiments of the present disclosure for achieving the above-described objective, may comprise: performing a first communication with a second device according to a non-simultaneous transmit and receive (NSTR) operation on one link of a first link and a second link; transmitting simultaneous transmit and receive (STR) reconfiguration information including one or more information elements needed for a conditional STR operation to the second device on the one link; and performing a second communication with the second device according to the conditional STR operation on the first link and the second link based on the one or more information elements, wherein the second communication is performed simultaneously on the first link and the second link.

The one or more information elements may include at least one of information on a preferred modulation and coding scheme (MCS), information on a preferred number of spatial streams (NSS), or reconfiguration information of multi-link parameter(s).

The performing of the second communication with the second device may comprise: transmitting a first data frame to the second device on the first link; and receiving a second data frame from the second device on the second link, the second data frame being generated based on a first MCS index indicated by the information on the preferred MCS or a second MCS index lower than the first MCS index.

The performing of the second communication with the second device may comprise: receiving a first data frame generated based on a third MCS index from the second device on the first link; and receiving a second data frame from the second device on the second link, the second data frame being generated based on a first MCS index indicated by the information on the preferred MCS or a second MCS index lower than the first MCS index, wherein the third MCS index is higher than the first MCS index or the second MCS index.

When a data frame is received from the second device in the first communication, a reception response frame for the data frame may include the STR reconfiguration information.

The transmitting of the STR reconfiguration information to the second device on the one link may comprise: generating a data frame including the STR reconfiguration information; and transmitting the data frame to the second device on the one link.

The transmitting of the STR reconfiguration information to the second device on the one link may comprise: generating an action frame including the STR reconfiguration information; and transmitting the action frame to the second device on the one link.

A method of a second device, according to exemplary embodiments of the present disclosure for achieving the above-described objective, may comprise: performing a first communication with a first device according to a non-simultaneous transmit and receive (NSTR) operation on one link of a first link and a second link; receiving simultaneous transmit and receive (STR) reconfiguration information including one or more information elements needed for a conditional STR operation from the first device on the one link; and performing a second communication with the first device according to the conditional STR operation on the first link and the second link based on the one or more information elements, wherein the second communication is performed simultaneously on the first link and the second link.

The one or more information elements may include at least one of information on a preferred modulation and coding scheme (MCS), information on a preferred number of spatial streams (NSS), or reconfiguration information of multi-link parameter(s).

The performing of the second communication with the first device may comprise: receiving a first data frame from the first device on the first link; and transmitting a second data frame to the first device on the second link, the second data frame being generated based on a first MCS index indicated by the information on the preferred MCS or a second MCS index lower than the first MCS index.

The performing of the second communication with the first device may comprise: transmitting a first data frame generated based on a third MCS index to the first device on the first link; and transmitting a second data frame to the first device on the second link, the second data frame being generated based on a first MCS index indicated by the information on the preferred MCS or a second MCS index lower than the first MCS index, wherein the third MCS index is higher than the first MCS index or the second MCS index.

The performing of the second communication with the first device may comprise: transmitting a first data frame to the first device on the first link; and transmitting a second data frame to the first device on the second link using spatial streams equal to or less than n indicated by the information on the preferred NSS.

When a data frame is transmitted to the first device in the first communication, a reception response frame for the data frame may include the STR reconfiguration information.

The receiving of the STR reconfiguration information from the first device on the one link may comprise: receiving a data frame including the STR reconfiguration information from the first device on the one link.

The receiving of the STR reconfiguration information from the first device on the one link may comprise: receiving an action frame including the STR reconfiguration information from the first device on the one link.

A first device, according to exemplary embodiments of the present disclosure for achieving the above-described objective, may comprise a processor, and the processor may cause the first device to perform: performing a first communication with a second device according to a non-simultaneous transmit and receive (NSTR) operation on one link of a first link and a second link; transmitting simultaneous transmit and receive (STR) reconfiguration information including one or more information elements needed for a conditional STR operation to the second device on the one link; and performing a second communication with the second device according to the conditional STR operation on the first link and the second link based on the one or more information elements, wherein the second communication is performed simultaneously on the first link and the second link.

The one or more information elements may include at least one of information on a preferred modulation and coding scheme (MCS), information on a preferred number of spatial streams (NSS), or reconfiguration information of multi-link parameter(s).

In the performing of the second communication with the second device, the processor may further cause the first device to perform: transmitting a first data frame to the second device on the first link; and receiving a second data frame from the second device on the second link, the second data frame being generated based on a first MCS index indicated by the information on the preferred MCS or a second MCS index lower than the first MCS index.

In the performing of the second communication with the second device, the processor may further cause the first device to perform: receiving a first data frame generated based on a third MCS index from the second device on the first link; and receiving a second data frame from the second device on the second link, the second data frame being generated based on a first MCS index indicated by the information on the preferred MCS or a second MCS index lower than the first MCS index, wherein the third MCS index is higher than the first MCS index or the second MCS index.

In the transmitting of the STR reconfiguration information to the second device on the one link, the processor may further cause the first device to perform: generating a data frame or action frame including the STR reconfiguration information; and transmitting the data frame or action frame to the second device on the one link.

### [Advantageous Effects]

According to the present disclosure, a device (e.g., station (STA) or access point (AP)) can perform simultaneous transmit and receive (STR) operations on multiple links. The STR operations on multiple links may be possible depending on a channel condition and/or the device's status. The STA can transmit information indicating whether an STR operation is possible, modulation and coding scheme (MCS) information, and/or information on the number of spatial streams (NSS) to the AP. Based on the information received from the STA, the AP can dynamically reconfigure multi-link information. In other words, a procedure for reconfiguring multi-link information between the AP and the STA may be performed. According to the aforementioned method, communication on multiple links can be smoothly performed.

### [Description of Drawings]

FIG. 1 is a block diagram illustrating a first exemplary embodiment of a communication node constituting a wireless LAN system.
FIG. 2 is a conceptual diagram illustrating a first exemplary embodiment of a multi-link configured between multi-link devices (MLDs).
FIG. 3A is a timing diagram illustrating a first exemplary embodiment of an STR operation.
FIG. 3B is a timing diagram illustrating a second exemplary embodiment of an STR operation.
FIG. 3C is a timing diagram illustrating a third exemplary embodiment of an STR operation.
FIG. 4A is a timing diagram illustrating a first exemplary embodiment of a method for reconfiguring multi-link information.
FIG. 4B is a timing diagram illustrating a second exemplary embodiment of a method for reconfiguring multi-link information.
FIG. 5 is a timing diagram illustrating a third exemplary embodiment of a method for reconfiguring multi-link information.
FIG. 6A is a block diagram illustrating a first exemplary embodiment of an A-control field for reconfiguring multi-link information.
FIG. 6B is a block diagram illustrating a second exemplary embodiment of an A-control field for reconfiguring multi-link information.
FIG. 7 is a block diagram illustrating a first exemplary embodiment of an action frame for reconfiguring multi-link information.
FIG. 8 is a timing diagram illustrating a first exemplary embodiment of a retransmission method using reconfigured multi-link information.
FIG. 9 is a timing diagram illustrating a first exemplary embodiment of an EMLSR operation method using reconfigured multi-link information.

### [Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, forms of the present disclosure will be described in detail with reference to the accompanying drawings. In describing the disclosure, to facilitate the entire understanding of the disclosure, like numbers refer to like elements throughout the description of the figures and the repetitive description thereof will be omitted.

In the following, a wireless communication system to which exemplary embodiments according to the present disclosure are applied will be described. The wireless communication system to which the exemplary embodiments according to the present disclosure are applied is not limited to the contents described below, and the exemplary embodiments according to the present disclosure can be applied to various wireless communication systems. A wireless communication system may be referred to as a 'wireless communication network'.

In exemplary embodiments, 'configuration of an operation (e.g., transmission operation)' may mean that 'configuration information (e.g., information element(s), parameter(s)) for the operation' and/or 'information indicating to perform the operation' is signaled. 'Configuration of an information element (e.g., parameter)' may mean that the information element is signaled. 'Configuration of a resource (e.g., resource region)' may mean that setting information of the resource is signaled.

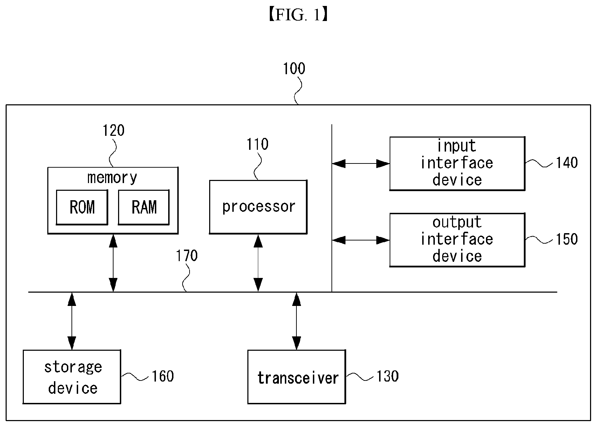

FIG. 1 is a block diagram illustrating a first exemplary embodiment of a communication node constituting a wireless LAN system.

As shown in FIG. 1, a communication node 100 may be an access point, a station, an access point (AP) multi-link device (MLD), or a non-AP MLD. An access point may refer to 'AP', and a station may refer to 'STA' or 'non-AP STA'. An operating channel width supported by an AP may be 20 megahertz (MHz), 80MHz, 160MHz, or the like. An operating channel width supported by a STA may be 20MHz, 80MHz, or the like.

The communication node 100 may include at least one processor 110, a memory 120, and a transceiver 130 connected to a network to perform communications. The transceiver 130 may be referred to as a transceiver, a radio frequency (RF) unit, an RF module, or the like. In addition, the communication node 100 may further include an input interface device 140, an output interface device 150, a storage device 160, and the like. The respective components included in the communication node 100 may be connected by a bus 170 to communicate with each other.

However, the respective components included in the communication node 100 may be connected through individual interfaces or individual buses centering on the processor 110 instead of the common bus 170. For example, the processor 110 may be connected to at least one of the memory 120, the transceiver 130, the input interface device 140, the output interface device 150, and the storage device 160 through a dedicated interface.

The processor 110 may execute program commands stored in at least one of the memory 120 and the storage device 160. The processor 110 may refer to a central processing unit (CPU), a graphics processing unit (GPU), or a dedicated processor on which the methods according to the exemplary embodiments of the present disclosure are performed. Each of the memory 120 and the storage device 160 may be configured as at least one of a volatile storage medium and a nonvolatile storage medium. For example, the memory 120 may be configured with at least one of a read only memory (ROM) and a random access memory (RAM).

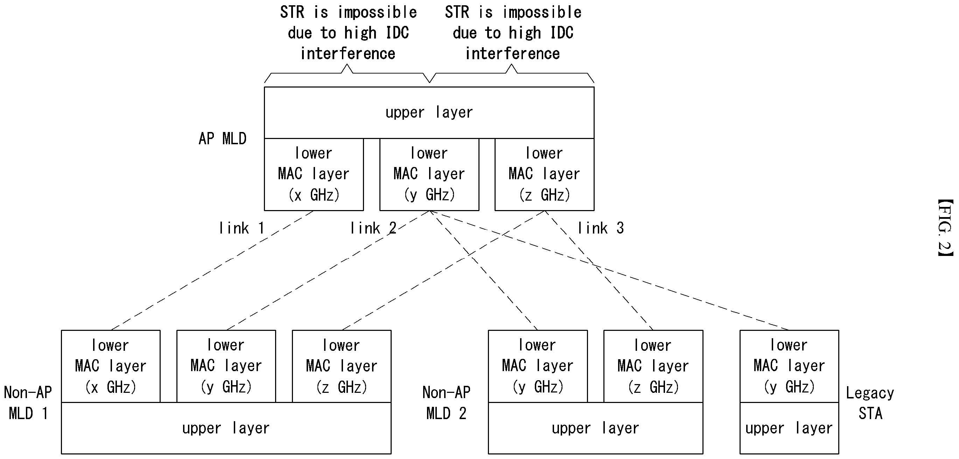

FIG. 2 is a conceptual diagram illustrating a first exemplary embodiment of a multi-link configured between multi-link devices (MLDs).

As shown in FIG. 2, an MLD may have one medium access control (MAC) address. In exemplary embodiments, the MLD may mean an AP MLD and/or non-AP MLD. The MAC address of the MLD may be used in a multi-link setup procedure between the non-AP MLD and the AP MLD. The MAC address of the AP MLD may be different from the MAC address of the non-AP MLD. AP(s) affiliated with the AP MLD may have different MAC addresses, and station(s) affiliated with the non-AP MLD may have different MAC addresses. Each of the APs having different MAC addresses within the AP MLD may be in charge of each link, and may perform a role of an independent AP.

Each of the STAs having different MAC addresses within the non-AP MLD may be in charge of each link, and may perform a role of an independent STA. The non-AP MLD may be referred to as a STA MLD. The MLD may support a simultaneous transmit and receive (STR) operation. In this case, the MLD may perform a transmission operation in a link 1 and may perform a reception operation in a link 2. The MLD supporting the STR operation may be referred to as an STR MLD (e.g., STR AP MLD, STR non-AP MLD). In exemplary embodiments, a link may mean a channel or a band. A device that does not support the STR operation may be referred to as a non-STR (NSTR) AP MLD or an NSTR non-AP MLD (or NSTR STA MLD).

The MLD may transmit and receive frames in multiple links by using a non-contiguous bandwidth extension scheme (e.g., 80 MHz + 80 MHz). The multi-link operation may include multi-band transmission. The AP MLD may include a plurality of APs, and the plurality of APs may operate in different links. Each of the plurality of APs may perform function(s) of a lower MAC layer. Each of the plurality of APs may be referred to as a 'communication node' or 'lower entity'. The communication node (i.e., AP) may operate under control of an upper layer (or the processor 110 shown in FIG. 1). The non-AP MLD may include a plurality of STAs, and the plurality of STAs may operate in different links. Each of the plurality of STAs may be referred to as a 'communication node' or 'lower entity'. The communication node (i.e., STA) may operate under control of an upper layer (or the processor 110 shown in FIG. 1).

The MLD may perform communications in multiple bands (i.e., multi-band). For example, the MLD may perform communications using an 80 MHz bandwidth according to a channel expansion scheme (e.g., bandwidth expansion scheme) in a 2.4 GHz band, and perform communications using a 160 MHz bandwidth according to a channel expansion scheme in a 5 GHz band. The MLD may perform communications using a 160 MHz bandwidth in the 5 GHz band, and may perform communications using a 160 MHz bandwidth in a 6 GHz band. One frequency band (e.g., one channel) used by the MLD may be defined as one link. Alternatively, a plurality of links may be configured in one frequency band used by the MLD. For example, the MLD may configure one link in the 2.4 GHz band and two links in the 6 GHz band. The respective links may be referred to as a first link, a second link, and a third link. Alternatively, each link may be referred to as a link 1, a link 2, a link 3, or the like. A link number may be set by an access point, and an identifier (ID) may be assigned to each link.

The MLD (e.g., AP MLD and/or non-AP MLD) may configure a multi-link by performing an access procedure and/or a negotiation procedure for a multi-link operation. In this case, the number of links and/or link(s) to be used in the multi-link may be configured. The non-AP MLD (e.g., STA) may identify information on band(s) capable of communicating with the AP MLD. In the negotiation procedure for a multi-link operation between the non-AP MLD and the AP MLD, the non-AP MLD may configure one or more links among links supported by the AP MLD to be used for the multi-link operation. A station that does not support a multi-link operation (e.g., IEEE 802.11a/b/g/n/ac/ax STA) may be connected to one or more links of the multi-link supported by the AP MLD.

When a band separation between multiple links (e.g., a band separation between a link 1 and a link 2 in the frequency domain) is sufficient, the MLD may be able to perform an STR operation. For example, the MLD may transmit a physical layer convergence procedure (PLCP) protocol data unit (PPDU) 1 using the link 1 among multiple links, and may receive a PPDU 2 using the link 2 among multiple links. On the other hand, if the MLD performs an STR operation when the band separation between multiple links is not sufficient, in-device coexistence (IDC) interference, which is interference between the multiple links, may occur. Accordingly, when the bandwidth separation between multiple links is not sufficient, the MLD may not be able to perform an STR operation. A link pair having the above-described interference relationship may be a non-simultaneous transmit and receive (NSTR)-limited link pair. Here, the MLD may be referred to as 'NSTR AP MLD' or 'NSTR non-AP MLD'.

For example, a multi-link including a link 1, a link 2, and a link 3 may be configured between an AP MLD and a non-AP MLD 1. When a band separation between the link 1 and the link 3 is sufficient, the AP MLD may perform an STR operation using the link 1 and the link 3. That is, the AP MLD may transmit a frame using the link 1 and receive a frame using the link 3. When a band separation between the link 1 and the link 2 is insufficient, the AP MLD may not be able to perform an STR operation using the link 1 and the link 2. When a band separation between the link 2 and the link 3 is not sufficient, the AP MLD may not be able to perform an STR operation using the link 2 and the link 3.

Meanwhile, in a wireless LAN system, a negotiation procedure for a multi-link operation may be performed in an access procedure between a station and an access point. A device (e.g., access point, station) that supports multiple links may be referred to as 'multi-link device (MLD)'. An access point supporting multiple links may be referred to as 'AP MLD', and a station supporting multiple links may be referred to as 'non-AP MLD' or 'STA MLD'. The AP MLD may have a physical address (e.g., MAC address) for each link. The AP MLD may be implemented as if an AP in charge of each link exists separately. A plurality of APs may be managed within one AP MLD. Therefore, coordination between a plurality of APs belonging to the same AP MLD may be possible. A STA MLD may have a physical address (e.g., MAC address) for each link. The STA MLD may be implemented as if a STA in charge of each link exists separately. A plurality of STAs may be managed within one STA MLD. Therefore, coordination between a plurality of STAs belonging to the same STA MLD may be possible.

For example, an AP1 of the AP MLD and a STA1 of the STA MLD may each be responsible for a first link and perform communication using the first link. An AP2 of the AP MLD and a STA2 of the STA MLD may each be responsible for a second link and perform communication using the second link. The STA2 may receive status change information for the first link on the second link. In this case, the STA MLD may collect information (e.g., status change information) received on the respective links, and control operations performed by the STA1 based on the collected information.

Hereinafter, data transmission and reception methods in a wireless LAN system will be described. Even when a method (e.g., transmission or reception of a signal) performed at a first communication node among communication nodes is described, a corresponding second communication node may perform a method (e.g., reception or transmission of the signal) corresponding to the method performed at the first communication node. That is, when an operation of a STA is described, an AP corresponding thereto may perform an operation corresponding to the operation of the STA. Conversely, when an operation of an AP is described, a STA corresponding thereto may perform an operation corresponding to the operation of the AP.

In exemplary embodiments, operations of a STA may be interpreted as operations of a STA MLD, operations of a STA MLD may be interpreted as operations of a STA, operations of an AP may be interpreted as operations of an AP MLD, and operations of an AP MLD may be interpreted as operations of an AP. A STA of a STA MLD may refer to a STA affiliated with the STA MLD, and an AP of an AP MLD may refer to an AP affiliated with the AP MLD. When a STA MLD includes a first STA operating on a first link and a second STA operating on a second link, operations of the STA MLD on the first link may be interpreted as operations of the first STA, and operations of the STA MLD on the second link may be interpreted as operations of the second STA. When an AP MLD includes a first AP operating on the first link and a second AP operating on the second link, operations of the AP MLD on the first link may be interpreted as operations of the first AP, and operations of the AP MLD on the second link may be interpreted as operations of the second AP. In exemplary embodiments, a transmission time of a frame may refer to a transmission start time or a transmission end time, and a reception time of a frame may refer to a reception start time or a reception end time. A transmission time may be interpreted as corresponding to a reception time. A time point may be interpreted as a time, and a time may be interpreted as a time point.

The AP MLD, AP, STA MLD, and/or STA may perform a reconfiguration procedure of multi-link information. The reconfiguration procedure of multi-link information may be performed dynamically.

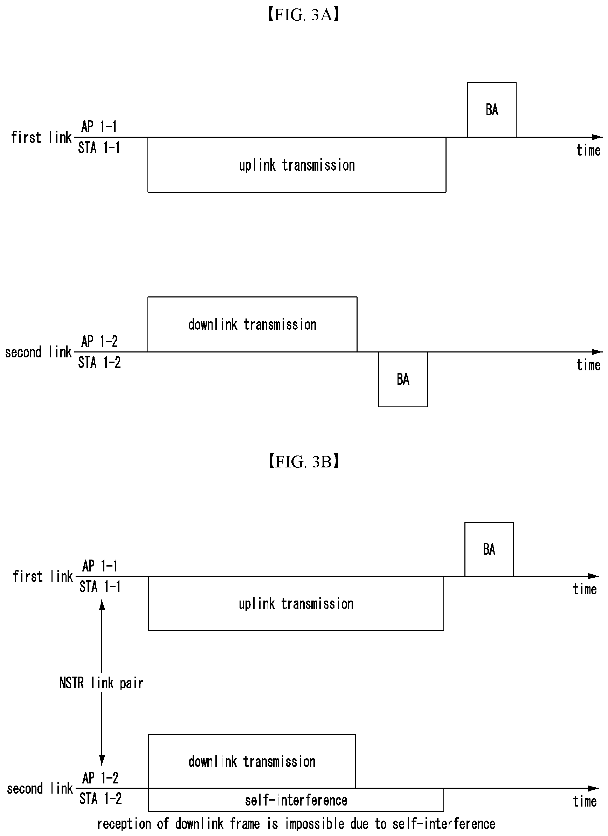

FIG. 3A is a timing diagram illustrating a first exemplary embodiment of an STR operation.

As shown in FIG. 3A, an AP MLD 1 may include an AP 1-1 operating on a first link and an AP 1-2 operating on a second link. A STA MLD 1 may include a STA 1-1 operating on the first link and a STA 1-2 operating on the second link. The AP MLD 1 and the STA MLD 1 may perform uplink communication on the first link. The AP MLD 1 and the STA MLD 1 may perform downlink communication on the second link. The STA MLD 1 may perform an STR operation. In the uplink communication, the STA 1-1 may transmit a data frame (e.g., uplink frame) to the AP 1-1. In other words, the operation of the STA 1-1 transmitting the data frame to the AP 1-1 may be the uplink communication. The uplink communication may include an uplink transmission operation and/or an uplink reception operation.

In the downlink communication, the AP 1-2 may transmit a data frame (e.g., downlink frame) to the STA 1-2. In other words, the operation of the AP 1-2 transmitting the data frame to the STA 1-2 may be the downlink communication. The downlink communication may include a downlink transmission operation and/or a downlink reception operation. In each of the uplink communication and the downlink communication, a frame including a data unit may be transmitted and received. The data unit may be a medium access control (MAC) layer protocol data unit (MPDU), an aggregated (A)-MPDU, and/or a physical layer protocol data unit (PPDU).

FIG. 3B is a timing diagram illustrating a second exemplary embodiment of an STR operation.

As shown in FIG. 3B, an AP MLD 1 may include an AP 1-1 operating on a first link and an AP 1-2 operating on a second link. A STA MLD 1 may include a STA 1-1 operating on the first link and a STA 1-2 operating on the second link. The AP MLD 1 and the STA MLD 1 may perform uplink communication on the first link. The AP MLD 1 and the STA MLD 1 may perform downlink communication on the second link. The first link and the second link on which the STA MLD 1 operates may form an NSTR link pair. In other words, the STA 1-1 and the STA 1-2 may be STAs operating on the NSTR link pair. In other words, the STA MLD 1 may configure the first link and the second link as the NSTR link pair. Communication of the STA 1-1 on the first link may cause interference to the STA 1-2 on the second link. Communication of the STA 1-2 on the second link may cause interference to the STA 1-1 on the first link. For example, while the STA 1-1 performs uplink communication on the first link, a reception operation of the STA 1-2 on the second link may be impossible due to self-interference and/or in-device coexistence interference.

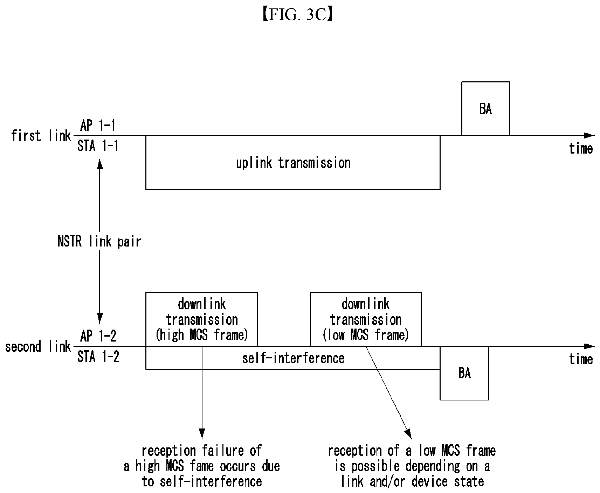

FIG. 3C is a timing diagram illustrating a third exemplary embodiment of an STR operation.

As shown in FIG. 3C, an AP MLD 1 may include an AP 1-1 operating on a first link and an AP 1-2 operating on a second link. A STA MLD 1 may include a STA 1-1 operating on the first link and a STA 1-2 operating on the second link. The AP MLD 1 and the STA MLD 1 may perform uplink communication on the first link. The AP MLD 1 and the STA MLD 1 may perform downlink communication on the second link. The STA MLD 1 may be an NSTR MLD, and each of the STA 1-1 and the STA 1-2 may be an NSTR STA. The first link and the second link may form an NSTR link pair.

While the STA MLD 1 performs uplink communication on the first link, the AP MLD 1 may perform downlink communication on the second link. In the downlink communication, the AP 1-2 may generate a frame (e.g., PPDU) using a low modulation and coding scheme (MCS) to reduce a reception error at the STA 1-2, and transmit the frame to the STA 1-2. In the present disclosure, a frame generated using a low MCS may be referred to as a 'low MCS frame', and a frame generated using a high MCS (e.g., non-low MCS) may be referred to as a 'high MCS frame'. The STA 1-2 may not receive a high MCS frame due to self-interference, and may receive a low MCS frame. In other words, when the STR operation is performed on the first link and the second link, reception of a high MCS frame on the second link may fail, and reception of a low MCS frame on the second link may succeed. If the reception of the low MCS frame on the second link is successful, the STA 1-2 may transmit a reception response frame for the low MCS frame to the AP 1-2. In the present disclosure, a reception response frame may be an acknowledgement (ACK) frame or a block ACK (BA) frame.

If a state of an NSTR link pair (e.g., link(s) belonging to the NSTR link pair) is good, the STR operation may also be possible on the NSTR link pair. In other words, if a specific condition is satisfied, the STR operation may also be possible on the NSTR link pair. The STR operation possible on the NSTR link pair may be referred to as a 'conditional STR operation'. For example, while the STA 1-1 performs uplink communication to the AP 1-1 on the first link, the AP 1-2 may perform downlink communication to the STA 1-2 on the second link. In the downlink communication, the AP 1-2 may transmit a low MCS frame to the STA 1-2. The STA 1-2 may receive the low MCS frame from the AP 1-2 and transmit a reception response frame for the low MCS frame to the AP 1-2. In other words, the STA MLD 1 may perform a conditional STR operation.

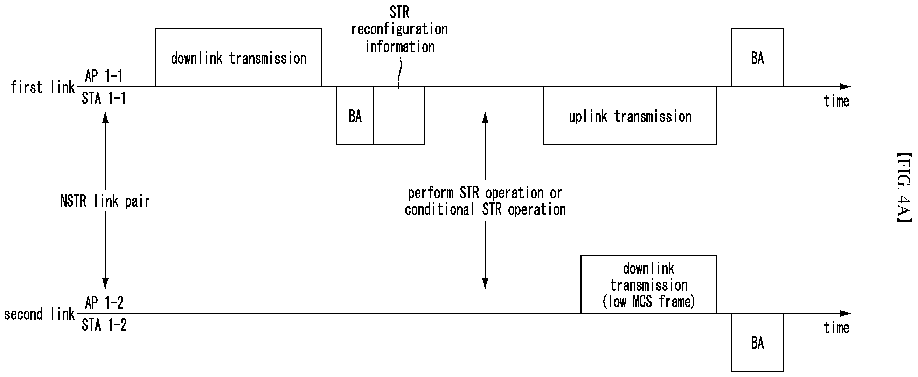

FIG. 4A is a timing diagram illustrating a first exemplary embodiment of a method for reconfiguring multi-link information.

As shown in FIG. 4A, an AP MLD 1 may include an AP 1-1 operating on a first link and an AP 1-2 operating on a second link. A STA MLD 1 may include a STA 1-1 operating on the first link and a STA 1-2 operating on the second link. The first link and the second link on which the STA MLD 1 operates may form an NSTR link pair. In other words, the STA 1-1 and the STA 1-2 may be STAs operating on the NSTR link pair. The first link and the second link may form the NSTR link pair. The STA MLD 1 may perform an NSTR operation on the first link and the second link. When the NSTR operation is performed, the STA MLD 1 may perform communication (e.g., communication according to the NSTR operation) with the AP MLD 1 using one link of the first link and the second link.

For example, the AP 1-1 may transmit a downlink frame (e.g., data frame) to the STA 1-1 on the first link. The STA 1-1 may receive the downlink frame from the AP 1-1 and transmit a reception response frame for the downlink frame to the AP 1-1 on the first link. When the STA MLD 1 supports the NSTR operation, while communication is performed between the STA MLD 1 (e.g., STA 1-1) and the AP MLD 1 (e.g., AP 1-1) on the first link, communication between the STA MLD 1 (e.g., STA 1-2) and the AP MLD 1 (e.g., AP 1-2) may not be performed on the second link.

The STA MLD 1 may transmit STR reconfiguration information to the AP MLD 1 using a reception response frame (e.g., BA frame) for the downlink transmission (e.g., transmission of the data frame) of the AP MLD 1. In other words, the reception response frame of the STA MLD 1 may include the STR reconfiguration information. The STR reconfiguration information may include information element(s) required for the conditional STR operation. The STR reconfiguration information may be used to request an STR operation (e.g., conditional STR operation) of the STA MLD 1. The reception response frame may include reception response information and the STR reconfiguration information. The reception response information may indicate a reception status (e.g., ACK or NACK) for the downlink transmission. For example, the reception response information may be a block ACK (BA) bitmap. The reception response frame including the reception response information and the STR reconfiguration information may have an A-MPDU form.

Alternatively, the STR reconfiguration information may be included in a MAC header of the BA frame. The STR reconfiguration information may include at least one of information on a preferred MCS or information on the preferred number of spatial streams (NSS). The information on the preferred MCS (i.e., preferred MCS information) may indicate a preferred MCS index (e.g., MCS level) for establishment of the NSTR link pair and/or conditional STR operation. The information on the preferred NSS (i.e., preferred NSS information) may indicate a preferred NSS for establishment of the NSTR link pair and/or conditional STR operation. The STA MLD 1 may generate the STR reconfiguration information including the preferred MCS information and/or the preferred NSS information for the conditional STR operation. In other words, the STR reconfiguration information may include information element(s) required for the conditional STR operation. In addition, the STR reconfiguration information may further include information for reconfiguration of multi-link parameters (e.g., multi-link information).

The AP MLD 1 may receive the reception response frame from the STA MLD 1 and may identify the reception response information and STR reconfiguration information included in the reception response frame. The AP MLD 1 may reconfigure capability of the STA MLD 1 based on the STR reconfiguration information received from the STA MLD 1. The AP MLD 1 may determine that the STA MLD 1 is able to perform the conditional STR operation based on the STR reconfiguration information. The AP MLD 1 may perform the conditional STR operation for the STA MLD 1 based on the preferred MCS information and/or preferred NSS information included in the STR reconfiguration information. For example, the AP MLD 1 may perform downlink transmission to the STA MLD 1 based on the STR reconfiguration information of the STA MLD 1.

In the downlink communication between the AP MLD 1 and the STA MLD 1, the AP MLD 1 may perform downlink transmission using n spatial streams indicated by the preferred NSS information of the STA MLD 1. n may be a natural number. When the preferred NSS information indicates n, the AP MLD 1 may perform downlink transmission using n or less spatial streams. In the downlink communication between the AP MLD 1 and the STA MLD 1, the AP MLD 1 may generate a frame using an MCS index indicated by the preferred MCS information of the STA MLD 1 or an MCS index lower than the MCS index indicated by the preferred MCS information, and transmit the frame. In this case, the conditional STR operation may be performed. For example, while the STA 1-1 performs uplink transmission on the first link, the AP 1-2 may transmit a low MCS frame on the second link. In other words, the AP 1-2 may transmit a frame generated using a low MCS index on the second link. The STA 1-2 may receive the frame generated using the low MCS index on the second link.

To remove an NSTR link pair, the STA MLD 1 may transmit STR reconfiguration information including change information of the NSTR link pair to the AP MLD 1. The change information of the NSTR link pair may request change, reconfiguration, or removal of the NSTR link pair. The AP MLD 1 may receive the STR reconfiguration information from the STA MLD 1 and remove the NSTR link pair based on the change information of the NSTR link pair included in the STR reconfiguration information. If the NSTR link pair is removed, the STA MLD 1 may perform an STR operation.

To add an NSTR link pair, the STA MLD 1 may transmit STR reconfiguration information including change information of the NSTR link pair to the AP MLD 1. The change information of the NSTR link pair may request change, reconfiguration, or addition of the NSTR link pair. The AP MLD 1 may receive the STR reconfiguration information from the STA MLD 1 and add the NSTR link pair based on the change information of the NSTR link pair included in the STR reconfiguration information. If the NSTR link pair is added, the STA MLD 1 may not perform an STR operation on the NSTR link pair.

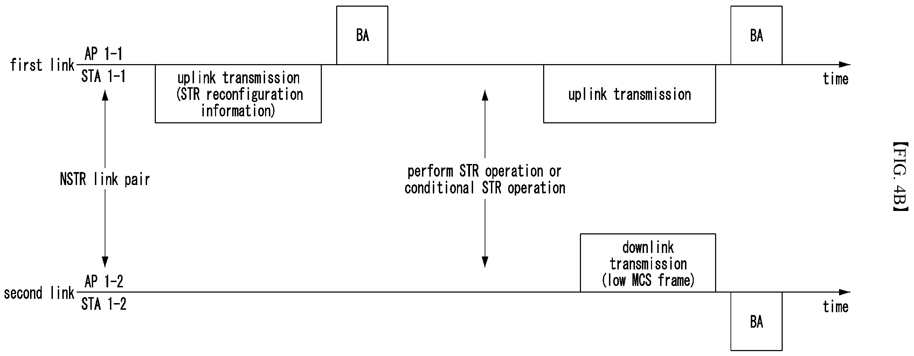

FIG. 4B is a timing diagram illustrating a second exemplary embodiment of a method for reconfiguring multi-link information.

As shown in FIG. 4B, an AP MLD 1 may include an AP 1-1 operating on a first link and an AP 1-2 operating on a second link. A STA MLD 1 may include a STA 1-1 operating on the first link and a STA 1-2 operating on the second link. The first link and the second link on which the STA MLD 1 operates may form an NSTR link pair. In other words, the STA 1-1 and the STA 1-2 may be STAs operating on the NSTR link pair. The first link and the second link may form the NSTR link pair. The STA MLD 1 may generate an uplink frame (e.g., data frame) including STR reconfiguration information, and may transmit the uplink frame to the AP MLD 1. The uplink frame may include a data unit and the STR reconfiguration information. The uplink frame including the data unit and the STR reconfiguration information may have an A-MPDU form. Alternatively, the STR reconfiguration information may be included in a MAC header (e.g., A-control field of a control field) of the uplink frame. The STR reconfiguration information may include at least one of preferred MCS information, preferred NSS information, or reconfiguration information of multi-link parameter(s).

The AP MLD 1 may reconfigure capability of the STA MLD 1 based on the STR reconfiguration information received from the STA MLD 1. The AP MLD 1 may change the STR operation for the STA MLD 1 based on the preferred MCS information and/or preferred NSS information included in the STR reconfiguration information. For example, the AP MLD 1 may perform downlink transmission to the STA MLD 1 based on the STR reconfiguration information of the STA MLD 1.

In the downlink communication between the AP MLD 1 and the STA MLD 1, the AP MLD 1 may perform the downlink transmission using a number of spatial streams equal to or less than n, as indicated by the preferred NSS information of the STA MLD 1. n may be a natural number. In the downlink communication between the AP MLD 1 and the STA MLD 1, the AP MLD 1 may generate a frame using an MCS index indicated by the preferred MCS information of the STA MLD 1 or an MCS index lower than the MCS index indicated by the preferred MCS information, and transmit the frame. In this case, the conditional STR operation may be performed. For example, while the STA 1-1 performs uplink transmission on the first link, the AP 1-2 may transmit a low MCS frame on the second link. In other words, the AP 1-2 may transmit a frame generated using the low MCS index on the second link.

To remove an NSTR link pair, the STA MLD 1 may transmit STR reconfiguration information including change information of the NSTR link pair to the AP MLD 1. The change information of the NSTR link pair may request change, reconfiguration, or removal of the NSTR link pair. The AP MLD 1 may receive the STR reconfiguration information from the STA MLD 1 and remove the NSTR link pair based on the change information of the NSTR link pair included in the STR reconfiguration information. If the NSTR link pair is removed, the STA MLD 1 may perform an STR operation.

To add an NSTR link pair, the STA MLD 1 may transmit STR reconfiguration information including change information of the NSTR link pair to the AP MLD 1. The change information of the NSTR link pair may request change, reconfiguration, or addition of the NSTR link pair. The AP MLD 1 may receive the STR reconfiguration information from the STA MLD 1 and add the NSTR link pair based on the change information of the NSTR link pair included in the STR reconfiguration information. If the NSTR link pair is added, the STA MLD 1 may not perform an STR operation on the NSTR link pair.

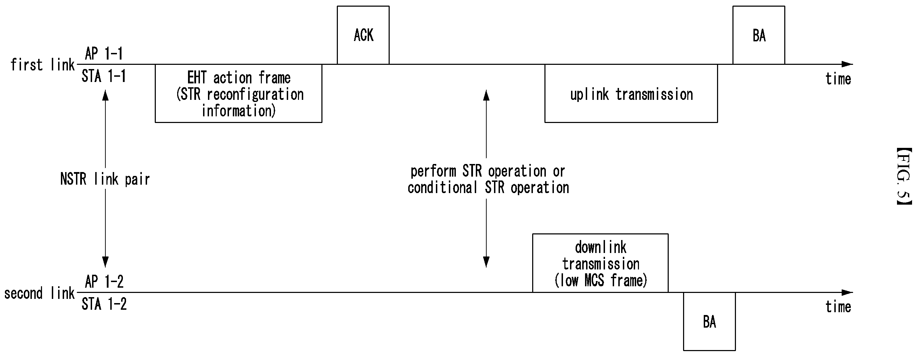

FIG. 5 is a timing diagram illustrating a third exemplary embodiment of a method for reconfiguring multi-link information.

As shown in FIG. 5, an AP MLD 1 may include an AP 1-1 operating on a first link and an AP 1-2 operating on a second link. A STA MLD 1 may include a STA 1-1 operating on the first link and a STA 1-2 operating on the second link. The first link and the second link on which the STA MLD 1 operates may form an NSTR link pair. In other words, the STA 1-1 and the STA 1-2 may be STAs operating on the NSTR link pair. The first link and the second link may form the NSTR link pair. The STA MLD 1 (e.g., STA 1-1) may transmit an STR reconfiguration frame including STR reconfiguration information to the AP MLD 1 (e.g., AP 1-1). The STR reconfiguration frame may be an action frame (e.g., extremely high throughput (EHT) action frame). The STR reconfiguration frame may be transmitted alone. Alternatively, the STR reconfiguration frame may have an A-MPDU form. In other words, the STR reconfiguration frame may be transmitted including the STR reconfiguration information and other information (e.g., data unit, reception response information).

The STR reconfiguration information may include at least one of preferred MCS information, preferred NSS information, or reconfiguration information of multi-link parameter(s). The AP MLD 1 may receive the STR reconfiguration frame from the STA MLD 1, and transmit a reception response frame for the STR reconfiguration frame to the STA MLD 1. The AP MLD 1 may identify the STR reconfiguration information included in the STR reconfiguration frame. The AP MLD 1 may reconfigure capability of the STA MLD 1 based on the STR reconfiguration information received from the STA MLD 1. The AP MLD 1 may change the STR operation for the STA MLD 1 based on the preferred MCS information and/or preferred NSS information included in the STR reconfiguration information. For example, the AP MLD 1 may perform downlink transmission to the STA MLD 1 based on the STR reconfiguration information of the STA MLD 1.

In the downlink communication between the AP MLD 1 and the STA MLD 1, the AP MLD 1 may perform downlink transmission using a number spatial streams equal or less than n, as indicated by the preferred NSS information of the STA MLD 1. n may be a natural number. In the downlink communication between the AP MLD 1 and the STA MLD 1, the AP MLD 1 may generate a frame using an MCS index indicated by the preferred MCS information of the STA MLD 1 or an MCS index lower than the MCS index indicated by the preferred MCS information, and transmit the frame. In this case, the conditional STR operation may be performed. For example, while the STA 1-1 performs uplink transmission on the first link, the AP 1-2 may transmit a low MCS frame on the second link. In other words, the AP 1-2 may transmit the frame generated using the low MCS index on the second link.

To remove an NSTR link pair, the STA MLD 1 may transmit STR reconfiguration information including change information of the NSTR link pair to the AP MLD 1. The change information of the NSTR link pair may request change, reconfiguration, or removal of the NSTR link pair. The AP MLD 1 may receive the STR reconfiguration information from the STA MLD 1 and remove the NSTR link pair based on the change information of the NSTR link pair included in the STR reconfiguration information. If the NSTR link pair is removed, the STA MLD 1 may perform an STR operation.

To add an NSTR link pair, the STA MLD 1 may transmit STR reconfiguration information including change information of the NSTR link pair to the AP MLD 1. The change information of the NSTR link pair may request change, reconfiguration, or addition of the NSTR link pair. The AP MLD 1 may receive the STR reconfiguration information from the STA MLD 1 and add the NSTR link pair based on the change information of the NSTR link pair included in the STR reconfiguration information. If the NSTR link pair is added, the STA MLD 1 may not perform an STR operation on the NSTR link pair.

Meanwhile, the control field and/or frame for reconfiguring multi-link information may be configured as follows.

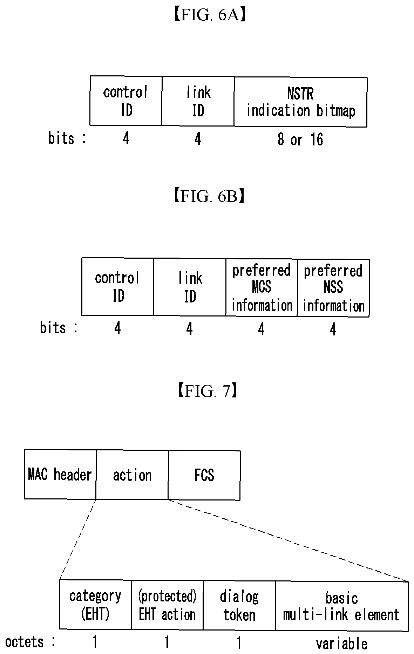

FIG. 6A is a block diagram illustrating a first exemplary embodiment of an A-control field for reconfiguring multi-link information.

As shown in FIG. 6A, an A-control field may include a control identifier (ID), a link ID, and an NSTR indication bitmap. The link ID may indicate a link to which other information element(s) included in the A-control field are applied. The NSTR indication bitmap may indicate link(s) belonging to an NSTR link pair. A link indicated by the NSTR indication bitmap and a link indicated by the link ID may form an NSTR link pair. For example, a link corresponding to a bit having a first value (e.g., 0) in the NSTR indication bitmap and the link indicated by the link ID may not form an NSTR link pair, and a link corresponding to a bit having a second value (e.g., 1) in the NSTR indication bitmap and the link indicated by the link ID may form an NSTR link pair.

FIG. 6B is a block diagram illustrating a second exemplary embodiment of an A-control field for reconfiguring multi-link information.

As shown in FIG. 6B, an A-control field may include a control ID, a link ID, preferred MCS information, and preferred NSS information. The preferred MCS information may indicate a maximum MCS index for performing the conditional STR operation. The preferred NSS information may indicate a maximum NSS for performing the conditional STR operation. The preferred NSS information may indicate the maximum number of spatial streams available to a STA operating on a link indicated by the link ID.

FIG. 7 is a block diagram illustrating a first exemplary embodiment of an action frame for reconfiguring multi-link information.

As shown in FIG. 7, an action frame (e.g., EHT action frame) may be used for reconfiguring multi-link information. The EHT action frame may include STR reconfiguration information. The EHT action frame may be referred to as an STR reconfiguration frame. The STR reconfiguration frame may be an EHT protected action frame. The EHT action frame may include a MAC header, an action field, and a frame check sequence (FCS) field. The action field may include a category field, a (protected) EHT action field, a dialog token field, and a basic multi-link element field. The basic multi-link element field may be used for changing multi-link parameter(s).

The basic multi-link element field may include information that the STA MLD (e.g., STA) wishes to change. For example, the STA may generate a basic multi-link element field that includes information needed to add or remove an NSTR link pair. The STA may change the multi-link parameter(s). The STR reconfiguration information may be included in the basic multi-link element field. The STR reconfiguration information may include information element(s) needed for the conditional STR operation. The basic multi-link element field may include at least one of preferred MCS information, preferred NSS information, or reconfiguration information of the multi-link parameter(s). The preferred MCS information, the preferred NSS information, and/or the reconfiguration information of the multi-link parameter(s) may be included in separate fields within the STR reconfiguration frame (e.g., EHT action frame).

Meanwhile, after reconfiguring the multi-link information, a retransmission operation, a multi-link single radio (MLSR) switching operation, and/or an enhanced multi-link single radio (EMLSR) switching operation may be performed. The retransmission operation, the MLSR switching operation, and/or the EMLSR switching operation may be performed using the reconfigured multi-link information.

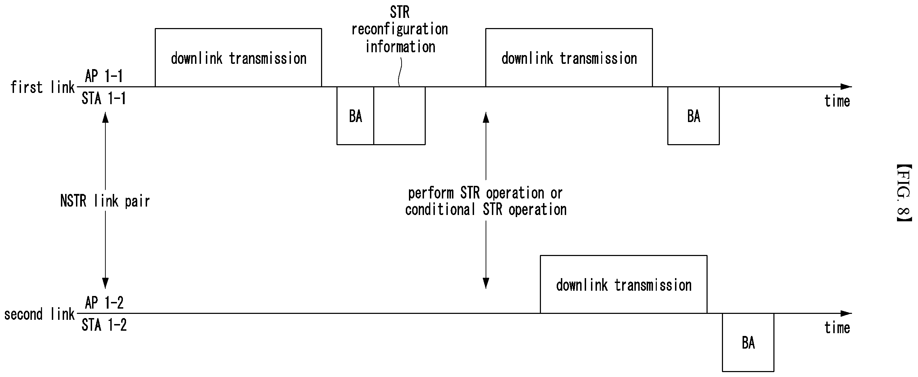

FIG. 8 is a timing diagram illustrating a first exemplary embodiment of a retransmission method using reconfigured multi-link information.

As shown in FIG. 8, an AP MLD 1 may include an AP 1-1 operating on a first link and an AP 1-2 operating on a second link. A STA MLD 1 may include a STA 1-1 operating on the first link and a STA 1-2 operating on the second link. The first link and the second link on which the STA MLD 1 operates may form an NSTR link pair. In other words, the STA 1-1 and the STA 1-2 may be STAs operating on the NSTR link pair. The first link and the second link may form the NSTR link pair. Multi-link parameter(s) may be changed by STR reconfiguration information and/or an STR reconfiguration frame. After the multi-link parameter(s) are changed, a retransmission operation may be performed based on indicated information (e.g., immediately indicated information).

For example, the AP MLD 1 may transmit a downlink frame (e.g., data frame) to the STA MLD 1. The STA MLD 1 may receive the downlink frame from the AP MLD 1, and transmit a reception response frame (e.g., BA frame) for the downlink frame to the AP MLD 1. The reception response frame may include STR reconfiguration information. The STR reconfiguration information of the STA MLD 1 may include STR capability information indicating that the STR operations (e.g., conditional STR operation) is possible. The AP MLD 1 may receive the reception response frame from the STA MLD 1, and identify the STR reconfiguration information included in the reception response frame. The AP MLD 1 may determine that the STR operation (e.g., conditional STR operation) can be performed in the STA MLD 1 based on the STR capability information included in the STR reconfiguration information.

If the reception response frame of the STA MLD 1 indicates a partial or complete reception failure of the downlink frame, and the STA MLD 1 is able to perform the STR operation (e.g., conditional STR operation), the AP MLD 1 may retransmit the downlink frame based on the STR operation (e.g., conditional STR operation). For example, the AP 1-1 may retransmit the downlink frame to the STA 1-1 on the first link, and the AP 1-2 may transmit the downlink frame to the STA 1-2 on the second link. Transmission of the downlink frame of the AP 1-2 on the second link may be retransmission of data that the AP 1-1 failed to transmit on the first link. Alternatively, the transmission of the downlink frame of the AP 1-2 on the second link may be transmission of data (e.g., new data) in a transmission queue of the AP MLD (e.g., AP 1-2) instead of the retransmission of the data that the AP 1-1 failed to transmit on the first link. The downlink frame on the first link may be generated based on a first MCS index, and the downlink frame on the second link may be generated based on a second MCS index. The first MCS index may be higher than the second MCS index. Alternatively, the first MCS index may be lower than the second MCS index. Alternatively, the first MCS index may be equal to the second MCS index. The second MCS index used for generation of the downlink frame on the second link may be selected within an MCS range (e.g., the maximum MCS index) indicated by the preferred MCS information included in the STR reconfiguration information.

A transmission period of the downlink frame on the first link may overlap with a transmission period of the downlink frame on the second link. A start time and/or an end time of the downlink frame on the first link may not coincide with a start time and/or an end time of the downlink frame on the second link. In other words, synchronous transmission of the downlink frames on the first link and the second link may not be performed. While the STA 1-2 receives the downlink frame on the second link, the STA 1-1 may transmit a reception response frame for the downlink frame to the AP 1-1 on the first link. Since the STA MLD 1 is able to perform the STR operation (e.g., conditional STR operation), the STA MLD 1 may successfully perform the reception operation of the downlink frame on the second link and the transmission operation of the reception response frame on the first link.

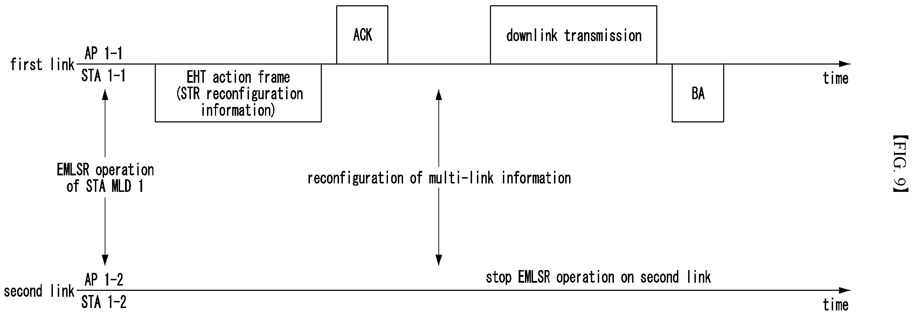

FIG. 9 is a timing diagram illustrating a first exemplary embodiment of an EMLSR operation method using reconfigured multi-link information.

As shown in FIG. 9, an AP MLD 1 may include an AP 1-1 operating on a first link and an AP 1-2 operating on a second link. A STA MLD 1 may include a STA 1-1 operating on the first link and a STA 1-2 operating on the second link. The STA MLD 1 may perform an EMLSR operation. Links on which the STA MLD 1 performs the EMLSR operation may be the first link and the second link. In other words, the first link and the second link may be EMLSR links. The STA MLD 1 may be referred to as an EMLSR MLD, and each of the STA 1-1 and the STA 1-2 affiliated with the STA MLD 1 may be referred to as an EMLSR STA. Multi-link parameter(s) may be changed by STR reconfiguration information and/or an STR reconfiguration frame. After the multi-link parameter(s) are changed, the EMLSR operation may be changed.

The STR reconfiguration information and/or the STR reconfiguration frame may include information (e.g., NSS information) indicating change of the EMLSR operation and/or information controlling the EMLSR operation. For example, the STA MLD 1 may transmit the STR reconfiguration frame (e.g., EHT action frame) to the AP MLD 1. The STR reconfiguration frame of STA MLD 1 may include information indicating to stop the EMLSR operation and/or information indicating to stop using the second link.

The AP MLD 1 may receive the STR reconfiguration frame from the STA MLD 1 and identify the information (e.g., changed parameter(s)) included in the STR reconfiguration frame. The AP MLD 1 may not perform a transmission operation based on the EMLSR operation according to the information included in the STR reconfiguration frame. In other words, the AP MLD 1 may determine that the STA MLD 1 does not perform the EMLSR operation based on the information included in the STR reconfiguration frame. Multi-link information may be reconfigured based on the information included in the STR reconfiguration frame. Therefore, the AP MLD 1 may transmit a downlink frame (e.g., data frame) to the STA MLD 1 without performing the EMLSR operation. The STA MLD 1 that does not perform the EMLSR operation may receive the downlink frame from the AP MLD 1 and transmit a reception response frame for the downlink frame to the AP MLD 1.

When the EMLSR operation is performed, the AP MLD 1 may first transmit an initial control frame (e.g., multi-user (MU)-RTS frame), and then transmit a data frame to the STA MLD 1 after a response frame (e.g., CTS frame) for the initial control frame is received.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a first device, comprising:
performing a first communication with a second device according to a non-simultaneous transmit and receive (NSTR) operation on one link of a first link and a second link;
transmitting simultaneous transmit and receive (STR) reconfiguration information including one or more information elements needed for a conditional STR operation to the second device on the one link; and
performing a second communication with the second device according to the conditional STR operation on the first link and the second link based on the one or more information elements,
wherein the second communication is performed simultaneously on the first link and the second link.

2. The method of claim 1, wherein the one or more information elements include at least one of information on a preferred modulation and coding scheme (MCS), information on a preferred number of spatial streams (NSS), or reconfiguration information of multi-link parameter(s).

3. The method of claim 2, wherein the performing of the second communication with the second device comprises:
transmitting a first data frame to the second device on the first link; and
receiving a second data frame from the second device on the second link, the second data frame being generated based on a first MCS index indicated by the information on the preferred MCS or a second MCS index lower than the first MCS index.

4. The method of claim 2, wherein the performing of the second communication with the second device comprises:
receiving a first data frame generated based on a third MCS index from the second device on the first link; and
receiving a second data frame from the second device on the second link, the second data frame being generated based on a first MCS index indicated by the information on the preferred MCS or a second MCS index lower than the first MCS index,
wherein the third MCS index is higher than the first MCS index or the second MCS index.

5. The method of claim 1, wherein when a data frame is received from the second device in the first communication, a reception response frame for the data frame includes the STR reconfiguration information.

6. The method of claim 1, wherein the transmitting of the STR reconfiguration information to the second device on the one link comprises:
generating a data frame including the STR reconfiguration information; and
transmitting the data frame to the second device on the one link.

7. The method of claim 1, wherein the transmitting of the STR reconfiguration information to the second device on the one link comprises:
generating an action frame including the STR reconfiguration information; and
transmitting the action frame to the second device on the one link.

8. A method of a second device, comprising:
performing a first communication with a first device according to a non-simultaneous transmit and receive (NSTR) operation on one link of a first link and a second link;
receiving simultaneous transmit and receive (STR) reconfiguration information including one or more information elements needed for a conditional STR operation from the first device on the one link; and
performing a second communication with the first device according to the conditional STR operation on the first link and the second link based on the one or more information elements,
wherein the second communication is performed simultaneously on the first link and the second link.

9. The method of claim 8, wherein the one or more information elements include at least one of information on a preferred modulation and coding scheme (MCS), information on a preferred number of spatial streams (NSS), or reconfiguration information of multi-link parameter(s).

10. The method of claim 9, wherein the performing of the second communication with the first device comprises:
receiving a first data frame from the first device on the first link; and
transmitting a second data frame to the first device on the second link, the second data frame being generated based on a first MCS index indicated by the information on the preferred MCS or a second MCS index lower than the first MCS index.

11. The method of claim 9, wherein the performing of the second communication with the first device comprises:
transmitting a first data frame generated based on a third MCS index to the first device on the first link; and
transmitting a second data frame to the first device on the second link, the second data frame being generated based on a first MCS index indicated by the information on the preferred MCS or a second MCS index lower than the first MCS index,
wherein the third MCS index is higher than the first MCS index or the second MCS index.

12. The method of claim 9, wherein the performing of the second communication with the first device comprises:
transmitting a first data frame to the first device on the first link; and
transmitting a second data frame to the first device on the second link using spatial streams equal to or less than n indicated by the information on the preferred NSS.

13. The method of claim 8, wherein when a data frame is transmitted to the first device in the first communication, a reception response frame for the data frame includes the STR reconfiguration information.

14. The method of claim 8, wherein the receiving of the STR reconfiguration information from the first device on the one link comprises: receiving a data frame including the STR reconfiguration information from the first device on the one link.

15. The method of claim 8, wherein the receiving of the STR reconfiguration information from the first device on the one link comprises: receiving an action frame including the STR reconfiguration information from the first device on the one link.

16. A first device comprising a processor, wherein the processor causes the first device to perform:
performing a first communication with a second device according to a non-simultaneous transmit and receive (NSTR) operation on one link of a first link and a second link;
transmitting simultaneous transmit and receive (STR) reconfiguration information including one or more information elements needed for a conditional STR operation to the second device on the one link; and
performing a second communication with the second device according to the conditional STR operation on the first link and the second link based on the one or more information elements,
wherein the second communication is performed simultaneously on the first link and the second link.

17. The first device of claim 16, wherein the one or more information elements include at least one of information on a preferred modulation and coding scheme (MCS), information on a preferred number of spatial streams (NSS), or reconfiguration information of multi-link parameter(s).

18. The first device of claim 17, wherein in the performing of the second communication with the second device, the processor further causes the first device to perform:
transmitting a first data frame to the second device on the first link; and
receiving a second data frame from the second device on the second link, the second data frame being generated based on a first MCS index indicated by the information on the preferred MCS or a second MCS index lower than the first MCS index.

19. The first device of claim 17, wherein in the performing of the second communication with the second device, the processor further causes the first device to perform:
receiving a first data frame generated based on a third MCS index from the second device on the first link; and
receiving a second data frame from the second device on the second link, the second data frame being generated based on a first MCS index indicated by the information on the preferred MCS or a second MCS index lower than the first MCS index,
wherein the third MCS index is higher than the first MCS index or the second MCS index.

20. The first device of claim 16, wherein in the transmitting of the STR reconfiguration information to the second device on the one link, the processor further causes the first device to perform:
generating a data frame or action frame including the STR reconfiguration information; and
transmitting the data frame or action frame to the second device on the one link.
